Europäisches Patentamt

European Patent Office

Office européen des brevets

(11) Publication number: **0 208 509 B1**

(12) **EUROPEAN PATENT SPECIFICATION**

(45) Date of publication of patent specification: **07.10.92**

(51) Int. Cl.⁵: **A21D 2/18**, A21D 13/08

(21) Application number: **86305143.9**

(22) Date of filing: **02.07.86**

(54) Baked products with shelf stable texture.

(30) Priority: **05.07.85 US 752409**

(43) Date of publication of application:
**14.01.87 Bulletin 87/03**

(45) Publication of the grant of the patent:
**07.10.92 Bulletin 92/41**

(84) Designated Contracting States:
**AT BE CH DE FR GB IT LI LU NL SE**

(56) References cited:
**GB-A- 1 517 158**
**US-A- 4 250 202**

(73) Proprietor: **UNITED BISCUITS (UK) LIMITED
Church Road
West Drayton, Middlesex UB7 6PR(GB)**

(72) Inventor: **Evans, Garfield G.
10 Fox Court
Storrington West Sussex(GB)**
Inventor: **Dodson, Adrian G.
8 Eleanor Road
Guildford Surrey(GB)**
Inventor: **McComis, William T. Battelle
Columbus Laboratories 505 King Avenue
Columbus Ohio 43201-2693(US)**

(74) Representative: **Ackroyd, Robert et al
W.P. THOMPSON & CO. Eastcheap House
Central Approach
Letchworth, Hertfordshire SG6 3DS(GB)**

Rank Xerox (UK) Business Services

EP 0 208 509 B1

**Description**

The present invention relates to baked products having shelf-stable texture, to dough preforms for making such products, and to methods of making such products.

US Patents 4,455,333 and 4,503,080 disclose baked products and, in particular, cookies which purport to be crumb continuous following the baking thereof. Both US Patents state that the standard of excellence in cookies is fresh, home-baked cookies and that the dominant characteristic of most of these fresh, home-baked cookies is their texture, specifically, a crisp friable outside surface and a ductile, chewy interior. However, both US Patents observe that such duality of textures in fresh home-baked cookies is lost as time progresses and, during the first 1-6 days after baking, the moisture equilibriates throughout the cookie, such that the once fresh home-baked cookies attain a relatively uniform harder texture throughout. Both US Patents suggest that ready-to-serve cookies may be formulated so as to manipulate sugar crystallization to emulate the multiple textural characteristics of the fresh home baked cookies and that the multiple textures in these sugar crystallization manipulated cookies are shelf stable for periods of time which substantially exceed that 1-6 days of home-baked cookies.

US Patent 4,455,333 suggests that the manipulation of sugar crystallization may be accomplished through the utilization of two different doughs in the cookie. One dough, i.e. the dough which is to remain more ductile and soft, contains high percentages of crystallization resistant sugars, e.g. fructose and dextrose. The other dough which is to remain relatively crisp and friable depends upon the presence of high percentages of a readily crystallizable sugar, i.e. sucrose, to produce the crisp texture desired.

US-A-4503080 suggests that readily crystallizable sugars, i.e. sucrose, may be employed in both of the doughs. Again, the crisp dough portion is stated to depend upon the crystallization of that sucrose. The dough portion which is intended to remain relatively chewy and ductile utilizes a crystallization inhibitor to retard or prevent the crystallization of the sucrose in that dough to achieve this soft and ductile texture. This patent discloses that a variety of such crystallization inhibitors may be employed, including starch hydrolysates, to produce the shelf-stable, ductile chewy texture of that portion upon baking.

US-A-4250202 discloses the replacement of sucrose in cakes by a blend of high fructose corn syrup and corn syrup having a dextrose equivalent (D.E.) of 42.

GB-A-1517158 discloses a baked goods premix of water, fat and 5 to 25%, based upon the fat and flour, of a 1 to 40 D.E. polysaccharide which is said to improve the handling properties of a dough made from the premix.

According to the present invention there is provided a baked food product containing dough ingredients and a starch hydrolysate having a D.E. of 42 or less, characterised in that it is baked to a water activity level in the range 0.25 to 0.8 and the amount of starch hydrolysate it contains is in the range of 2% to 30% by weight of the unbaked dough and is effective to impart to the baked product a crisp, shelf-stable texture which is substantially harder than that of an equivalent product containing no starch hydrolysate.

The present invention also provides a baked food product containing dough ingredients and a starch hydrolysate having a D.E. of 42 or less, characterised in that it is baked to a water activity in the range 0.25 to 0.8 and comprises at least two crumb continuous regions which differ in texture from each other, one of the regions comprising a baked dough having a soft and chewy texture and the other region comprising a baked dough which includes the starch hydrolysate in an amount which is in the range of 2% to 30% by weight of the unbaked dough and is effective to impart a crisp, substantially harder texture to the other region than the soft and chewy texture of the one region, the soft and chewy and harder textures being shelf stable.

Further, the invention provides a dough preform comprising dough ingredients and a starch hydrolysate having a D.E. of 42 or less, characterised in that it is laminated and comprises:

first and second unbaked premixed dough layers containing ingredients which, when baked, result in a laminate substantially crumb continuous over its cross section, the first layer, when baked, having a shelf stable first texture; and the second layer containing the starch hydrolysate in an amount which is in the range of 2% to 30% by weight of the dough and is effective to impart a crisp, substantially harder, shelf stable texture to the second layer, when baked, than the first texture.

In another aspect, the invention provides a method of preparing a baked dough product preform comprising dough ingredients and a starch hydrolysate having a D.E. of 42 or less, characterised by:

premixing a first dough which, when baked, has a soft, chewy shelf stable texture;

premixing a second dough including the starch hydrolysate present in an amount which is in the range of 2% to 30% by weight of the dough and is effective to impart a crisp substantially harder shelf-pp stable texture to the second dough, when baked, than the soft, chewy texture of the first dough; and

laminating together the first and second doughs.

The starch hydrolysates preferably have a D.E. of about 20 or less and preferably comprise at least 8 percent by weight of the dough, before baking. Preferably, the starch hydrolysates comprise about 14-20 percent by weight of the dough before baking and preferably have a D.E. of about 10-20.

The dough which contains the starch hydrolysates may also include sucrose or a reducing sugar in addition to any sugars which may be present in the starch hydrolysates, but sucrose may be absent from the dough containing the starch hydrolysate.

Where the products of the invention are to exhibit multiple textures following baking, the layers or regions which exhibit the soft and chewy texture may include a reducing sugar in an amount such that, when baked, these layers or regions have a shelf-stable, soft and chewy texture. Also when the products are to be exhibit multiple textures following baking, those textures are preferably present when the product is baked to an intermediate water activity level.

The present invention contrasts with the suggestions of US-A-4503080 in that certain starch hydrolysates in certain effective amounts, and whether in the absence or presence of sugars, have the capability themselves of imparting exactly the opposite characteristics to doughs when baked. More specifically, in the present invention, certain starch hydrolysates impart a wide range of desirable qualities of hardness, rather than softness, to the baked product depending upon the kinds and amounts of starch hydrolysates used. The starch hydrolysates of the present invention may be employed either alone or in combination with other sugars or mixtures thereof, for example either readily crystallizable sucrose or non-readily crystallizable reducing sugars, such as fructose or dextrose, to adjust and control the enhanced textural hardening effects desired.

The utilization of the starch hydrolysates in the present invention to adjust and control the hardness textural qualities in baked products provides a number of substantial advantages over the sugar crystallization manipulation mechanisms discussed in US-A-4455333 and US-A-4503080.

One substantial advantage is that the kinds and amounts of starch hydrolysates of the present invention may be selected so as to accurately tailor the textural characteristics of the baked product generally independently of sugar crystallization. Thus, by utilizing starch hydrolysates for the adjustment and control of the textural characteristics of the baked product, the degree of sweetness may also be readily controlled within wide limits and substantially independently of textural considerations. Indeed, sugars may be actually essentially eliminated from the starch hydrolysate texture controlled dough of the present invention and the texture of that dough may be adjusted and controlled solely by the starch hydrolysates. Thus, caloric intake may be reduced, as well as sweetness.

On the contrary, sweetness control is difficult in the mechanisms employing sugar crystallization manipulation because, by definition, the latter necessitates the use of substantial quantities of sugars in the doughs to achieve the desired textural results, thereby resulting in high sweetness and caloric levels. However, if additional sweetness is desired in the starch hydrolysate texture controlled doughs of the present invention, either readily crystallizable sugars, non-readily crystallizable reducing sugars or mixtures thereof which may be otherwise typically employed in sweetened baked products may be added because the starch hydrolysates of the invention are compatible with all of those sugars.

Still another advantage of the present invention is that the starch hydrolysates which may be employed are readily available and inexpensive, and have been widely accepted for food usage.

Still another significant advantage of the present invention is that the textural characteristics of cookies using starch hydrolysates in accordance with the present invention to adjust and control texture are capable of even more precise adjustment and control of the texture than are cookies which rely merely upon the adjustment of texture by sugar crystallization manipulation. Thus, cookies made in accordance with the present invention are capable of even closer emulation of the fresh, home-baked cookies of the kind which the above-mentioned U.S. Patents state are the standard of excellence in the cookie world.

Still another advantage of utilizing starch hydrolysates for the adjustment and control of the texture of the baked products in accordance with the present invention is that the baked products attain textural equilibrium within a matter of hours after baking, e.g. 24 hours, as opposed to weeks in the baked products which rely upon the manipulation of sugar crystallization to control texture as in the above-mentioned U.S. Patents. Thus, holding the products for substantial periods of time to enable them to attain textural equilibrium is unnecessary with the products of the present invention. Not only do these products attain rapid textural equilibrium, but these textures remain shelf stable for months, if not indefinitely, provided that the products are maintained under sealed packaging conditions.

The above-mentioned U.S. Patent 4,455,333 also contains a disclosure of a quantitative method for measuring the textural dichotomy characteristics of the multiple texture cookies which are made by the sugar crystallization manipulation suggested by that Patent and also disclose certain minimum quantitive standards which that Patent states should be met when that quantitative method is employed to measure

EP 0 208 509 B1

the textural dichotomy of those cookies. Cookies made in accordance with the present invention utilizing starch hydrolysates in one of the doughs to adjust and control the texture of that dough when baked are readily capable not only of meeting the afore-mentioned quantitative textural dichotomy standards as set forth in that Patent, but also exhibit distinct sensory organoleptic textural dichotomies.

In the embodiments of the present invention described below, starch hydrolysates of certain Dextrose Equivalent (D.E.) values and in effective amounts are incorporated into doughs which otherwise contain typical dough ingredients. The starch hydrolysates impart a texture to these doughs, upon baking to intermediate water activity levels, which is substantially harder than the texture that would otherwise result in such intermediate water activity baked products in the absence of the starch hydrolysates.

The above mentioned typical dough ingredients include flour and water. In addition the typical dough ingredients may also include various shortenings, sugars and other additive ingedients as flavoring, leavening, coloring agents, etc.

Intermediate water activity levels as employed herein are baked products which have an $a_w$ after baking of between about 0.25 - 0.8. Baked products which have lesser $a_w$'s are generally regarded as low water activity products and those having $a_w$'s above 0.8 are generally regarded as high water activity products. In general, the baked products contemplated by the present invention are intermediate water activity products and, even more preferably, have $a_w$'s upon baking of between about 0.4 - 0.7.

The preferred starch hydrolysates contemplated by the present invention are those which have a D.E. (Dextrose Equivalent) of about 42 or less. Starch hydrolysates of such D.E. values include compositions which are generally referred to as maltodextrins and syrup solids. One such syrup solid which is readily available on the market is corn syrup solids. However, it will be understood that the source of the starches from which the starch hydrolysates of the present invention may be derived is not limited. Those sources, whether the starch hydrolysate is a maltodextrin or a syrup solid, may include for example rice or corn, as well as grains, potato or tapioca.

Starch hydrolysates, whether they be maltodextrins or syrup solids, are typically of non- or low sweetness, food approved, nutritive saccharide polymers that are prepared by the partial hydrolysis of starches with safe and suitable acids and/or enzymes. In the production of such starch hydrolysates, the starch linkages are broken to produce varying sized sugar molecules, ranging from small amounts of the simplest single unit sugar molecule of dextrose or glucose to the more complex oligosaccharide molecules of up to Malto-decaoses or greater. This conversion process is carried out until the desired D.E. (Dextrose Equivalent) is reached. The starches, prior to conversion, have a D.E. value of zero, whereas the starches when their linkages are totally cleaved into their individual molecular units have a D.E. of 100. Starches which have been partially converted so as to have D.E. values of less than 20 are generally termed maltodextrins. Where the conversion process has been carried out further to D.E. values of 20 or more, the product is generally referred to as syrup solids or syrups. Thus, it will be seen that at least to some measure, the D.E. value is a measure of the molecular weight of the starch hydrolysate.

In the present invention, starch hydrolysates of D.E. value 42 or less are preferred to achieve the degree of hardness upon baking that is contemplated by the present invention. Starch hydrolysates having such D.E. values are generally capable of being dried to solid form, whereas those having higher D.E.'s are syrupy or liquid in nature and are not generally dried. Although starch hydrolysates which are typically dried are preferred for use in the present invention, it will be understood that the starch hydrolysates which may be employed in the present invention need not necessarily be dried as they are incorporated in the doughs of the present invention. It may be desirable to incorporate undried starch hydrolysates into the doughs and, if this is done, all that is necessary is to compensate for the amount of water which is also added to the dough by the amount of liquid which may be present in the starch hydrolysate in order to achieve the desired dough workability.

The amounts of starch hydrolysates which have been found to be effective to impart the desired substantially harder texture to the dough are on the order of about 8 weight percent or more of the total weight of the dough, before baking. Even more preferably, an amount of starch hydrolysates comprising about 14-20 percent by weight of the total weight of the premixed dough is preferred of starch hydrolysates having a D.E. between about 10-20. Cookies incorporating the starch hydrolysates in the latter amounts and D.E. values have been found to very closely emulate the crisper, the friable outside surface of fresh, home-baked cookies, such as Toll House cookies.

The substantially harder texture as contemplated herein is in contrast to soft and chewy textures. The term is intended to be inclusive of a range of textures other than soft and chewy textures of from very hard at one extreme to crumbly at the other extreme with crisp or brittle textures falling somewhere in between. In any event, when a baked dough having the substantially hard texture, as the term is contemplated in the present invention, is combined with a baked dough having a soft and chewy texture, the texture of the harder textured dough will be sufficiently distinct from the texture of the soft and chewy dough to be readily perceived upon sensible organoleptic examination, as well as quantitative textural dichotomy measurements.

As previously stated, the starch hydrolysates of the present invention are readily compatible with sugars of either the readily crystallizable variety, i.e. sucrose, the crystallization resistant sugars, i.e. reducing sugars such as fructose and dextrose, or mixtures thereof. Thus, the levels of sugars in the doughs may be readily varied together with the starch hydrolysates to achieve sweetness and realize texture adjustment and control.

By way of example, sucrose may be added to the dough if a high sweetness in the baked product, for example cookies, is desired. In this event the quantity of starch hydrolysates would typically be reduced somewhat to compensate for the hardening effect of the sucrose. Conversely, greater amounts of starch hydrolysates may be included in the dough to achieve similar textural qualities where the amounts of sucrose are reduced when lower degrees of sweetness are desired. Indeed, the starch hydrolysates of the present invention are capable of achieving a wide range of textured hardnesses in the baked dough in the complete absence of sucrose.

Moreover, reducing sugars, such as fructose and dextrose, which would otherwise tend to result in a soft chewy dough upon baking may be combined with the starch hydrolysates in the doughs of the present invention and still result in the hardness textural qualities desired. The inclusion of such reducing sugars may be advantageous for any one of several reasons, e.g. sweetness, dough handling or spread. What is important in the present invention is the utilization of the starch hydrolysates to adjust and control the texture of the baked dough product to result in a harder texture than would otherwise occur in their absence, whether these starch hydrolysates are used alone or whether the dough also includes sugars.

Where baked products are desired which exhibit a dichotomy of textures, e.g. crisp and soft, chewy, two doughs may be laminated together and baked. One of the doughs may contain a crystallization resistant sugar to achieve the soft, chewy texture. The other dough would contain the starch hydrolysates of the present invention so as to achieve the harder texture. In order to produce a baked product in which these two laminated doughs result in an organoleptic perception of textural dichotomy, the thickness of the respective laminations may be on the order of about 1-4 mm. The ratio of the softer to harder dough may vary. By way of example a ratio of 2:1 has been found to be acceptable.

Although it is believed that the present invention will be fully appreciated after considering the foregoing description, examples of specific embodiments of the invention follow.

EXAMPLE 1

Cookies were prepared from two doughs as follows:

| Outer Dough | |
| --- | --- |
| Ingredient | Wt.% |
| Maltodextrin (corn derived) [CPC - 17 D.E.] | 20 |
| Shortening (solid) | 23.3 |
| Vanilla extract | 0.07 |
| Caramel (flavoring & coloring) | 0.17 |
| Yellow (coloring) | 0.06 |
| Water | 10.0 |
| Flour (bleached) | 45.3 |
| Salt | 0.49 |
| Sodium bicarbonate | 0.61 |

| Inner Dough | |
| --- | --- |
| Ingredient | Wt.% |
| Shortening (solid) | 7.62 |
| Vegetable oil | 8.04 |
| Powdered sucrose | 8.73 |
| Light brown sugar molasses | 1.06 |
| Vanilla extract | 0.06 |
| Lecithin | 0.57 |
| Invert sugar syrup (72% solids) | 18.26 |
| Flour (bleached) | 24.29 |
| Salt | 0.93 |
| Pregelled starch | 1.06 |
| Chocolate chips | 29.37 |

The outer dough mixing procedure was as follows:

The shortening, vanilla extract, caramel and yellow were mixed for 2 minutes at medium speed on a Hobart mixer fitted with a K blade; then for 2 minutes at high speed.

The maltodextrin, flour, salt and sodium bicarbonate were added to the above mixture and mixing was continued for 1 minute at slow speed; then for 2.5 minutes at medium speed.

The water was then added to the last mentioned mixture and mixing was continued for 1 minute at medium speed.

The inner dough mixing procedure was as follows:

The shortening, vegetable oil, powdered sucrose, molasses, vanilla extract and lecithin were mixed on the same mixer for 2 minutes at medium speed.

The invert syrup was then added to that mixture and mixing was continued for 0.5 minutes at medium speed followed by 3.5 minutes at high speed.

The flour and salt were then added to the last mentioned mixture and the mixer was operated for 2 revolutions at low speed.

The pregelled starch was then added and mixing was continued for 3 minutes at medium speed.

The chocolate chips were then added and the entire mixture was mixed for 0.5 minute at low speed.

All mixing and the ingredients which were mixed were at ambient temperature.

These two doughs were held at ambient temperature prior to any subsequent processing. The inner dough was held for 1 hour and the outer dough was held for at least 15 minutes.

Both doughs were then coextruded such that the ratio of inner dough:outer dough was 2:1 and formed into spheres of about 17 g each.

The spheres were then baked in a three zone convection oven for 10 minutes. The zone temperatures in the oven were set at 205ºC for the first zone, 160ºC for the second zone and 110ºC for the third zone. 250 ml/min of water was also injected into the first zone of the oven.

The baked cookies were then placed on wire trays and cooled under forced ambient air until the cookies had cooled to ambient temperature. The cookies were then wrapped in aluminum pouches and sealed for further evaluation.

Further evaluations were conducted after storage at ambient temperature for not less than 24 hours.

The following evaluations were then performed at the following times:

| Evaluation | Times | | |
| --- | --- | --- | --- |
| | 24 hr. | 3 da. | 30 da. |
| total moisture (avg.) | 6.0% | 6.2 | 6.2% |
| $a_w$ (avg.) | 0.54 | 0.54 | 0.54 |
| pH | 6.6 | 6.3 | 6.3 |
| sensory | - | duality of texture was good & outer was crisp. | same as at 3 da. |
| Instron* | - | 3.5 | 2.8 |

*[log max (stiffness/plasticity) - log min (stiffness/plasticity] using the procedures outlined in U.S. Letters Patent No. 4,455,333.

EP 0 208 509 B1

The moisture, $a_w$ and pH evaluations were performed using recognized standard analytical procedures.

The sensory evaluations of the cookies of this example as well as those to follow were performed organoleptically by a trained sensory panel of 10 persons who evaluated both the textural dichotomy of the baked cookies, as well as the textural characteristics of the outer regions of the baked cookies.

This panel also compared the texture of the cookies of this example as well as those of the following examples with Toll House cookies 1 hour after baking of the Toll House cookies. The Toll House cookies were prepared in accordance with the recipe on the commercially packaged Nestle Toll House Morsels package and those cookies were baked for 7.5 minutes at 190ºC (375ºF). The cookies of this example were found to be the closest texturally to the 1 hour old Toll House cookies.

EXAMPLE 2

Cookies were prepared from two doughs as follows:

| Outer Dough | |
| --- | --- |
| Ingredient | Wt.% |
| Maltodextrin (corn derived) [CPC-17D.E.] | 14.0 |
| Shortening (solid) | 27.4 |
| Vanilla extract | 0.09 |
| Caramel (flavoring & coloring) | 0.42 |
| Yellow (coloring) | 0.07 |
| Water | 3.5 |
| Flour (bleached) | 53.19 |
| Salt | 0.58 |
| Sodium bicarbonate | 0.73 |

| Inner Dough | |
| --- | --- |
| Ingredient | Wt.% |
| Shortening (solid) | 7.13 |
| Vegetable oil | 7.55 |
| Powdered sucrose | 8.20 |
| Light brown sugar molasses | 1.0 |
| Vanilla extract | 0.06 |
| Lecithin | 0.54 |
| Water | 3.04 |
| Invert sugar syrup (72% solids) | 17.20 |
| Flour (bleached) | 22.81 |
| Salt | 0.88 |
| Sodium bicarbonate | 0.49 |
| Pregelled starch | 3.57 |
| Chocolate chips | 27.58 |

The outer dough mixing procedure was as follows:

The shortening, vanilla extract, caramel and yellow were mixed for 30 seconds at slow speed on a small Hobart mixer fitted with a K blade; scraped down; then mixed for 20 seconds on slow speed; scraped; then mixed for 30 seconds on medium speed; scraped; then mixed for 30 seconds on medium speed and scraped.

The maltodextrin, flour, salt and sodium bicarbonate were then added; mixed for 1 minute at slow speed; scraped; mixed for 1 minute slow speed and scraped.

Water was then added and mixing was continued for 40 seconds at slow speed.

The inner dough mixing procedure was as stated in Example 1, except that the water was added with the invert syrup and the sodium bicarbonate was added with the salt.

Temperatures and holding times were as stated in Example 1.

7

The outer dough was sheeted on a Rondo sheeter. Weighed portions of about 12 g of the inner dough were placed on portions of the outer dough sheet and a second sheet of outer dough was placed over the portions of inner dough. A die cutter was employed to cut out the portions into cookie shapes of about 18g. The ratio of inner dough: outer dough was 2:1.

These cookie shapes were then baked in an electric chamber oven with no forced convection or water injection at 205ºC for 7.5 minutes.

The baked cookies were then cooled and sealed as in Example 1.

At 2 days after bake the evaluation was as follows:

| total moisture (avg.) | 7.1% |
|---|---|
| $a_w$ (avg.) | 0.62 |
| pH | 6.7 |
| sensory | duality of texture was good & outer was crisp. |
| Instron | 3.91 |

EXAMPLE 3

Cookies were prepared as follows:

An outer dough was prepared having the same formulation as in Example 1, except that the corn derived maltodextrin had a D.E. of 15 and was obtained from Staley Industrial Products.

The mixing procedures for the outer dough were as described in Example 2.

An inner dough was formulated and mixed as described in Example 1.

Temperatures and holding times were as stated in Example 1.

Forming, shaping and dough ratios were as stated in Example 2. Baking was as stated in Example 2, except that the bake time was 7 3/4 minutes.

The baked cookies were cooled and sealed as in Example 1.

At 3 days after bake the evaluation was as follows:

| total moisture (avg.) | 7.2% |
|---|---|
| $a_w$ (avg.) | 0.57 |
| pH | 6.0 |

After 5 days the sensory evaluation was that the duality of texture was good and the outer was crisp. The Instron difference was 4.06.

EXAMPLE 4

Cookies were prepared as follows:

An outer dough was prepared having the same formulation as in Example 1, except that the maltodextrin was potato derived and had a D.E. of 10, and it was obtained from Avebe, Veendam, Holland.

The mixing procedures for the outer dough were as described in Example 2, except that the water as divided; 3/4 of the water was added after the flour mixing stage; mixed for 40 seconds at slow speed; and the remaining 1/4 was added and mixing was continued for 10 seconds on slow speed.

The inner dough had the formulation and mixing procedures as described in Example 2.

Temperatures and holding times were as stated in Example 1.

Forming, shaping and dough ratios were as stated in Example 2. Baking was as stated in Example 2, except that the bake time was 8 1/4 minutes.

The baked cookies were cooled and sealed as in Example 1.

The following evaluations were then performed at the following times:

| Evaluation | Times | |
|---|---|---|
| | 2 da. | 13 da. |
| total moisture (avg.)<br>$a_w$ (avg)<br>pH<br>sensory | 6.0%<br>0.54<br>7.2<br>duality of texture was good & outer was crisp | 6.1%<br>0.54<br>7.2<br>same as at 2 da. |

EXAMPLE 5

Cookies were prepared from two doughs as follows:

| Outer Dough | |
|---|---|
| Ingredient | Wt.% |
| Maltodextrin (potato derived) [Avelse - 2 D.E.] | 20.0 |
| Shortening (solid) | 21.3 |
| Vanilla extract | 0.07 |
| Caramel | 0.33 |
| Yellow | 0.06 |
| Water | 16.0 |
| Flour (bleached) | 41.3 |
| Salt | 0.45 |
| Sodium bicarbonate | 0.56 |

The inner dough had the formulation and mixing procedures of Example 2.

The outer dough mixing procedure was as follows:

The shortening, vanilla, caramel and yellow were mixed as in Example 2.

The flour, salt and sodium bicarbonate were then added; mixed for 30 seconds on slow speed and scraped down. The maltodextrin was then added and mixed for 1 minute; scraped; mixed for 1 1/2 minutes and scraped.

The water was then added and mixed as set forth in Example 4.

Temperatures and holding times were as stated in Example 1.

Forming, shaping and dough ratios were as stated in Example 2. Baking was as stated in Example 2, except that the bake time was 9 1/2 minutes.

The baked cookies were cooled and sealed as in Example 1.

The following evaluations were then performed at the following times:

| Evaluation | Times | |
|---|---|---|
| | 2 da. | 13 da. |
| total moisture (avg.)<br>$a_w$ (avg.)<br>pH<br>sensory<br>Instron | 6.0%<br>0.53<br>7.3<br>dichotomy of texture fair & outer was crumbly<br>3.3 | 6.1%<br>0.59<br>6.1<br>same as at 2 da.<br>2.6 |

EXAMPLE 6

Cookies were prepared from two doughs as follows:

9

| Outer Dough | |
|---|---|
| Ingredient | Wt.% |
| Maltodextrin (corn derived) [CPC - 17 D.E.] | 8.2 |
| Shortening (solid) | 27.7 |
| Vanilla extract | 0.11 |
| Caramel | 0.27 |
| Yellow | 0.13 |
| Water | 8.5 |
| Flour (bleached) | 54.4 |
| Salt | 0.6 |
| Sodium bicarbonate | 0.6 |

The inner dough had the formulation and mixing procedure of Example 2.

The outer dough mixing procedure was as follows:

The maltodextrin, shortening, vanilla, caramel and yellow were mixed for 1 minute at slow speed.

The water was added and mixed for 1 minute at slow speed; scraped; mixed for 1 minute at medium speed and scraped.

The flour, salt and sodium bicarbonate were added and mixed for 3 minutes at slow speed.

Temperatures and holding times were as stated in Example 1.

Forming, shaping and dough ratios were as stated in Example 2. Baking was as stated in Example 2, except that the bake time and temperature were 7 minutes at 200°C.

The baked cookies were cooled and sealed as in Example 1.

At 2 days after bake the evaluation was as follows:

| | |
|---|---|
| total moisture (avg.) | 6.2% |
| $a_w$ (avg.) | 0.55 |
| pH | 7.2 |
| sensory | dichotomy of texture was fair & outer was crumbly |

EXAMPLE 7

Cookies were prepared from two doughs as follows:

| Outer Dough | |
|---|---|
| Ingredient | Wt.% |
| Spray dried corn syrup (corn derived) (Staley - 20 D.E.] | 20 |
| Shortening (solid) | 24.3 |
| Vanilla Extract | 0.08 |
| Caramel | 0.19 |
| Yellow | 0.07 |
| Water | 7.0 |
| Flour (bleached) | 47.18 |
| Salt | 0.52 |
| Sodium bicarbonate | 0.65 |

The inner dough was prepared having the same formulation as in Example 1.

The outer dough mixing procedure was as follows:

The shortening, vanilla extract, caramel and yellow were mixed for 1 minute at medium speed and then for 1 minute at high speed.

The spray dried corn syrup, flour, salt and sodium bicarbonate were added to the above mixture and mixing was continued for 1 minute at slow speed and then for 1 minute at medium speed.

The water was divided into two equal halves. The first half was added and mixing proceeded for 30 seconds at medium speed. The second half was then added and mixing continued for 20 seconds at medium speed.

The inner dough mixing procedure was as follows:

The shortening, vegetable oil, powdered sucrose, molasses, vanilla extract and lecithin were mixed on the same mixer for 2 minutes at medium speed and then for 3 minutes at high speed.

The invert syrup was then added to that mixture and mixing was continued for 1 minute at medium speed followed by 1 minute at high speed.

The flour and salt were then added to the last mentioned mixture and the mixer was operated for 2 revolutions at low speed.

The pregelled starch was then added and mixing continued for 1 minute at low speed followed by 1 minute at medium speed.

The chocolate chips were then added and the entire mixture was mixed for 0.5 minutes at low speed.

Temperatures and holding times were as stated in Example 1.

Forming, shaping and dough ratios were as stated in Example 2.

These cookie shapes were then baked in an electric chamber oven with no forced convection or water injection at 180°C for 5.5. minutes.

The baked cookies were then cooled and sealed as in Example 1.

The following evaluations were then performed at the following times:

| Evaluation | Times | |
|---|---|---|
| | 3 da. | 13 da. |
| total moisture (avg.) | 6.8% | 6.8% |
| $a_w$ (avg.) | 0.53 | 0.53 |
| pH | 6.7 | 6.7 |
| sensory | duality of texture was good & outer was crisp | same as at 3 da. |
| Instron | 3.2 | 3.9 |

EXAMPLE 8

Cookies were prepared from two doughs as follows:

| Outer Dough | |
|---|---|
| Ingredient | Wt.% |
| Spray dried corn syrup (corn derived) [CPC - 42 D.E.] | 30 |
| Shortening (solid) | 20.7 |
| Vanilla Extract | 0.07 |
| Caramel | 0.16 |
| Yellow | 0.07 |
| Water | 8.0 |
| Flour (bleached) | 40.0 |
| Salt | 0.44 |
| Sodium bicarbonate | 0.65 |

The inner dough was prepared having the same formulation as in Example 7 and both doughs were mixed using the procedures as set forth in Example 7. Temperatures, holding times, forming, shaping and dough ratios were also as set forth in Example 7.

These cookie shapes were then baked in an electric chamber oven with no forced convection or water injection at 180°C for 6.0 minutes.

The baked cookies were then cooled and sealed as in Example 1.

The following evaluations were then performed at the following times:

| Evaluation | Times | |
|---|---|---|
| | 3 da. | 13 da. |
| total moisture (avg.)<br>$a_w$ (avg.)<br>pH<br>sensory<br>Instron | 6.3%<br>0.53<br>6.3<br>duality of texture was fair & outer was tough-crisp<br>2.8 | 6.3%<br>0.53<br>6.3<br>same as at 3 da.<br>2.7 |

## EXAMPLE 9

Cookies were prepared from two doughs as follows:

| Outer Dough | |
|---|---|
| Ingredient | Wt.% |
| Maltodextrin (corn derived) [CPC - 17 D.E.] | 20.0 |
| Invert syrup | 5.0 |
| Shortening (solid) | 22.0 |
| Vanilla extract | 0.07 |
| Caramel | 0.17 |
| Yellow | 0.06 |
| Water | 9.0 |
| Flour (bleached) | 42.7 |
| Salt | 0.47 |
| Sodium bicarbonate | 0.58 |

The inner dough was prepared having the same formulation as in Example 7. Both doughs were mixed using the procedures as set forth in Example 7, except that the invert syrup was added together with the shortening, vanilla extract, caramel and yellow. Temperatures, holding times, forming, shaping and dough ratios were also as set forth in Example 7.

These cookie shapes were then baked in an electric chamber oven with no forced convection or water injection at 180ºC for 6.5 minutes.

The baked cookies were then cooled and sealed as in Example 1.

The following evaluations were then performed at the following times:

| Evaluation | Times | |
|---|---|---|
| | 3 da. | 13 da. |
| total moisture (avg.)<br>$a_w$ (avg.)<br>pH<br>sensory<br>Instron | 6.6%<br>0.53<br>6.4<br>duality of texture was good & outer was crisp<br>3.3 | 6.6%<br>0.53<br>6.4<br>same as at 3 da.<br>3.4 |

## EXAMPLE 10

Cookies were prepared from two doughs as follows:

12

| Top Dough | |
|---|---|
| Ingredient | Wt.% |
| Maltodextrin [Grain Processing Corp., Maltrin 100-10 D.E.] | 9.64 |
| Shortening (Oleo) | 24.10 |
| Granulated sugar | 6.43 |
| Brown sugar | 3.21 |
| Whole egg (dried) | 0.69 |
| Whey (dried) | 0.34 |
| Vanilla | 0.37 |
| Flour | 45.90 |
| Sodium bicarbonate | 0.31 |
| Salt | 0.75 |
| Water 2°C (35°F) | 8.26 |

| Bottom Dough | |
|---|---|
| Ingredient | Wt.% |
| Shortening (Oleo) | 25.0 |
| Fructose (crystalline) | 12.0 |
| Granulated sugar | 12.0 |
| Emulsifier | 0.2 |
| Vanilla | 0.5 |
| Flour | 40.0 |
| Sodium bicarbonate | 0.5 |
| Salt | 0.7 |
| Water | 9.1 |

All ingredients with the exception of the water were at ambient temperature.

The top dough mixing procedure was as follows:

The maltodextrin, shortening, sugars, egg, whey and vanilla were creamed for 2 minutes on No. 1 speed in a Hobart Model N-50 mixer.

The water was added to this mixture and mixing was continued for 3 minutes on No. 1 speed.

The flour, sodium bicarbonate and salt were then added and mixing was continued for 3 minutes on No. 2 speed.

The bottom dough mixing procedure was as follows:

The shortening, fructose, granulated sugar, emulsifier and vanilla were creamed for 2 minutes on No.1 speed on the Hobart Model N-50 mixer.

The water was added to this mixture and mixing was continued for 1.5 minutes on speed No. 2.

The flour, sodium bicarbonate and salt were then added and mixing was continued for 3 minutes on No. 2 speed.

About 5 g. of the bottom dough was pressed into a circle of about 1 9/16 inches diameter and placed on a cookie sheet. About 11 g of the top dough was pressed into a circle of about 1 13/16 inches diameter and placed on top of the bottom dough circle.

These superimposed doughs were then baked in a preheated electric chamber oven with no forced convection for 8 minutes at 191°C (375°F).

It was observed that somewhat excessive spread of the bottom dough relative to the size of the top dough had occurred. After 24 hours, however, the sensory perception of the top and bottom of the cookies was crisp and the center of the cookies was chewy.

EXAMPLE 11

Cookies were prepared from two doughs as follows:

| Top Dough | |
| --- | --- |
| Ingredient | Wt.% |
| Maltodextrin [Grain Processing Corp., Maltrin 100-10 D.E.] | 5.00 |
| Shortening (Oleo) | 24.00 |
| Granulated sugar | 8.38 |
| Brown sugar | 3.00 |
| High fructose corn syrup | 3.00 |
| Whole egg (dried) | 0.69 |
| Whey (dried) | 0.34 |
| Vanilla | 0.37 |
| Flour | 45.90 |
| Sodium bicarbonate | 0.31 |
| Salt | 0.75 |
| Water 2°C (35°F) | 8.26 |

| Bottom Dough | |
| --- | --- |
| Ingredient | Wt.% |
| Shortening (Oleo) | 12.0 |
| High fructose corn syrup | 25.0 |
| Granulated sugar | 7.0 |
| Brown sugar | 7.0 |
| Vanilla | 0.4 |
| Flour | 30.0 |
| Starch (Tender Jel 434) | 4.5 |
| Sodium bicarbonate | 0.3 |
| Salt | 0.8 |
| Water 2°C (35°F) | 13.0 |

All ingredients with the exception of the water were at ambient temperature.

The outer dough mixing procedure was as set forth in Example 10.

The bottom dough mixing procedure was as follows:

The shortening and sugars were creamed for 1 minute on No. 1 speed on the Hobart Model N-50 mixer.

The high fructose corn syrup and vanilla were added and mixing was continued for 1 minute on speed No. 1.

The water was added to this mixture and mixing was continued for 1 minute on speed No. 1.

The flour, starch, sodium bicarbonate and salt were then added and mixing was continued for 2 minutes on No. 3 speed.

320 g of chocolate chips were then added to 800 g of this bottom dough mixture. This dough was then mixed for 1/2 minute at No. 1 speed.

About 11.2 g of the bottom dough was pressed into a circle of about 1.2 inches diameter and placed on a cookie sheet. About 5.8 g of the top dough was pressed into a circle of about 2 inches diameter and placed on top of the bottom dough circle.

These superimposed doughs were then baked in a preheated electric chamber oven with no forced convection for 9 minutes at 191°C (375°F).

It was observed that the top dough flowed around the edge of the bottom dough to form a seal. After 24 hours the sensory perception of the baked product was a crunchy outer shell and a soft, spongy center.

EXAMPLE 12

Cookies were prepared from two doughs as follows:

| Outer Dough | |
| --- | --- |
| Ingredient | Wt.% |
| Maltodextrin [Grain Processing Corp., Maltrin 100-10 D.E.] | 2.0 |
| Shortening (Oleo) | 24.0 |
| Granulated sugar | 14.0 |
| Brown sugar molasses | 5.0 |
| Vanilla | 0.4 |
| Flour | 45.0 |
| Sodium bicarbonate | 0.3 |
| Salt | 0.7 |
| Water 2°C (35°F) | 8.6 |

| Inner Dough | |
| --- | --- |
| Ingredient | Wt.% |
| Shortening (Crisco) | 20.0 |
| High fructose corn syrup | 21.0 |
| Powdered sugar | 16.0 |
| Molasses | 4.2 |
| Flour | 38.0 |
| Sodium bicarbonate | 0.1 |
| Salt | 0.7 |

The outer dough mixing procedure was as follows:

The maltodextrin, shortening, sugar, brown sugar molasses, and vanilla were creamed for 2 minutes on No. 1 speed in a Hobart Model N-50 mixer.

The water was added to this mixture and mixing was continued 3 minutes on No. 1 speed.

The flour, sodium bicarbonate and salt were then added and mixing was continued for 3 minutes on No. 2 speed.

The inner dough mixing procedure was as follows:

The flour and refrigerated shortening were creamed for 1/2 minute on No. 1 speed on the Hobart Model N-50 mixer.

The refrigerated dry ingedients were added and mixing was continued for about 1 minute on No. 1 speed until the mixture was uniformly granular.

The refrigerated liquids were then added and mixing was continued until the mixture was uniform.

225g of chocolate chips were then stirred into 800 g of this inner dough mixture.

The inner dough was refrigerated overnight and the outer dough was fresh.

About 1.75 g of the outer dough was pressed into a circle of about 1.6 inches diameter and placed on a cookie sheet. A ball of about 10.5 g of the inner dough was placed on top of the bottom dough circle. About 1.75 g of outer dough was pressed into a circle of about 2 inches in diameter and placed over the inner dough ball. This dough form was then pressed on top to flatten and the edges of the outer dough were pressed to seal the form.

These superimposed doughs were then baked in a preheated electric chamber oven with no forced convection for 7 1/2 minutes at 191°C (375°F).

After 24 hours, the sensory perception of the cookies was a crisp outside and a chewy inside.

It will thus be seen that the starch hydrolysates as contemplated by the present invention are capable of imparting desired hardness textures to baked products of intermediate water activity levels, including baked laminated doughs having textural dichotomies. This ability is not only surprising in view of the contrary suggestions of the prior art, but also results in the several aforementioned advantages. By employing the starch hydrolysates of the present invention, accurate adjustment and control of the hardness texture of the baked product may be readily and inexpensively achieved. At the same time the sweetness of the product may be accurately adjusted and controlled over substantially wider ranges than heretofore possible where the sugars were manipulated to control the texture of the baked product. Due to the ability to accurately adjust and control the texture of the baked product, it is possible to more closely approach the

EP 0 208 509 B1

textural characteristics of fresh, home-baked products e.g. Toll House cookies. Moreover, the textures which are achieved by the present invention are attained rapidly after baking and remain shelf stable for substantial period of time thereafter.

It will be understood that the invention may be practiced either by the use of a single starchhydrolysate or a blend of starch hydrolysates having differing D.E. values.

It will also be understood that the embodiments of the invention that have been described are merely a few of those possible.

**Claims**

**Claims for the following Contracting States : BE, CH, DE, FR, GB, IT, LI, LU, NL, SE**

1. A baked food product containing dough ingredients and a starch hydrolysate having a D.E. of 42 or less, characterised in that it is baked to a water activity level in the range 0.25 to 0.8 and the amount of starch hydrolysate it contains is in the range of 2% to 30% by weight of the unbaked dough and is effective to impart to the baked product a crisp, shelf-stable texture which is substantially harder than that of an equivalent product containing no starch hydrolysate.

2. A baked food product as claimed in claim 1, wherein the starch hydrolysate comprises at least 8 percent by weight of the total weight of the dough ingredients before baking.

3. A baked food product as claimed in claim 2, wherein the starch hydrolysate comprises 14 to 20 percent by weight of the total weight of the dough ingredients before baking and has a D.E. of 10 to 20.

4. A baked food product as claimed in any preceding claim, from which sucrose is absent.

5. A baked food product as claimed in any of claims 1 to 3, wherein the dough ingredients also include sucrose or a reducing sugar in addition to any sugars which may be present in the starch hydrolysate.

6. A baked food product containing dough ingredients and a starch hydrolysate having a D.E. of 42 or less, characterised in that it is baked to a water activity in the range 0.25 to 0.8 and comprises at least two crumb continuous regions which differ in texture from each other, one of the regions comprising a baked dough having a soft and chewy texture and the other region comprising a baked dough which includes the starch hydrolysate in an amount which is in the range of 2% to 30% by weight of the unbaked dough and is effective to impart a crisp, substantially harder texture to the other region than the soft and chewy texture of the one region, the soft and chewy and harder textures being shelf stable.

7. A baked food product as claimed in claim 6, wherein the starch hydrolysate comprises at least 8 percent by weight of the dough in the other region before baking.

8. A baked food product as claimed in claim 7, wherein the starch hydrolysate comprises 14 to 20 percent by weight of the total weight of the dough in the other region before baking, and has a D.E. of 10 to 20.

9. A baked food product as claimed in claim 6, 7 or 8, wherein sucrose is absent from the other region.

10. A baked food product as claimed in claim 6, 7 or 8, wherein the dough in the other region includes sucrose or a reducing sugar in addition to any sugar which may be present in the starch hydrolysate.

11. A baked food product as claimed in any of claims 6 to 10, wherein the baked dough in the one region includes a reducing sugar in an amount such that the one region has a shelf stable texture which is soft and chewy relative to said other region.

12. A baked food product as claimed in any preceding claim, wherein the starch hydrolysate has a D.E. of 20 or less.

13. A baked food product as claimed in claim 12, wherein the starch hydrolysate is a maltodextrin.

14. A dough preform comprising dough ingredients and a starch hydrolysate having a D.E. of 42 or less, characterised in that it is laminated and comprises:

16

EP 0 208 509 B1

first and second unbaked premixed dough layers containing ingredients which, when baked, result in a laminate substantially crumb continuous over its cross section, the first layer, when baked, having a shelf stable first texture; and the second layer containing the starch hydrolysate in an amount which is in the range of 2% to 30% by weight of the dough and is effective to impart a crisp, substantially harder, shelf stable texture to the second layer, when baked, than the first texture.

15. A preform as claimed in claim 14, wherein the starch hydrolysate comprises at least 8 percent by weight of the total weight of the premixed dough in the second layer.

16. A preform as claimed in claim 15, wherein the starch hydrolysate comprises 14 to 20 percent by weight of the total weight of the premixed dough in the second layer and has a D.E. of 10 to 20.

17. A preform as claimed in claim 14, 15 or 16, wherein sucrose is absent from the second layer.

18. A preform as claimed in claim 14, 15 or 16, wherein the premixed dough in the second layer includes sucrose or a reducing sugar in addition to any sugars which may be present in the starch hydrolysate.

19. A preform as claimed in any of claims 14 to 17, wherein the first premixed dough layer includes a reducing sugar in an amount such that, when baked, the first layer has a shelf stable texture which is soft and chewy relative to the second layer.

20. A preform as claimed in any of claims 14 to 19, wherein the starch hydrolysate has a D.E. of 20 or less.

21. A preform as claimed in claim 20, wherein the starch hydrolysate is a maltodextrin.

22. A method of preparing a baked dough product preform comprising dough ingredients and a starch hydrolysate having a D.E. of 42 or less, characterised by:
premixing a first dough which, when baked, has a soft, chewy shelf stable texture;
premixing a second dough including the starch hydrolysate present in an amount which is in the range of 2% to 30% by weight of the dough and is effective to impart a crisp, substantially harder shelf-stable texture to the second dough, when baked, than the soft, chewy texture of the first dough; and
laminating together the first and second doughs.

23. A method as claimed in claim 22, wherein the starch hydrolysate has a D.E. of 20 or less.

24. A method as claimed in claim 23, wherein the starch hydrolysate is a maltodextrin.

25. A method as claimed in claim 22, 23 or 24, wherein the starch hydrolysate comprises at least 8 percent by weight of the total weight of the second dough.

26. A method as claimed in claim 25, wherein the starch hydrolysate comprises 14 to 20 percent by weight of the total weight of the second dough and has a D.E. of 10 to 20.

27. A method as claimed in any claims 22 to 26, wherein sucrose is absent from the second dough.

28. A method as claimed in any of claims 22 to 27, wherein the second dough includes sucrose or a reducing sugar in addition to any sugar which may be present in the starch hydrolysate.

29. A method as claimed in any of claims 22 to 28, wherein the first dough includes a reducing sugar in an amount effective to produce the soft, chewy shelf-stable texture upon baking.

30. A method as claimed in any of claims 22 to 29, having the step of baking the laminated first and second doughs, to a water activity in the range 0.25 to 0.8.

**Claims for the following Contracting State : AT**

1. A method of preparing a baked food product containing dough ingredients and a starch hydrolysate

17

having a D.E. of 42 or less, characterised in that an unbaked dough containing the starch hydrolysate in an amount in the range 2% to 30% by weight of the unbaked dough is baked to a water activity in the range 0.25 to 0.8, the amount of starch hydrolysate being effective to impart to the baked product a crisp, shelf-stable texture which is substantially harder than that of an equivalent product containing no starch hydrolysate.

2. A method as claimed in claim 1, wherein the starch hydrolysate comprises at least 8 percent by weight of the total weight of the unbaked dough.

3. A method as claimed in claim 2, wherein the starch hydrolysate comprises 14 to 20 percent by weight of the total weight of the unbaked dough and has a D.E. of 10 to 20.

4. A method as claimed in any preceding claim, wherein sucrose is absent from the baked food product.

5. A method as claimed in any of claims 1 to 3, wherein the dough ingredients also include sucrose or a reducing sugar in addition to any sugars which may be present in the starch hydrolysate.

6. A method of preparing a baked dough product preform comprising dough ingredients and a starch hydrolysate having a D.E. of 42 or less, characterised by:
   premixing a first dough which, when baked, has a soft, chewy shelf stable texture;
   premixing a second dough including the starch hydrolysate present in an amount which is in the range of 2% to 30% by weight of the dough and is effective to impart a crisp, substantially harder shelf-stable texture to the second dough, when baked, than the soft, chewy texture of the first dough; and
   laminating together the first and second doughs.

7. A method as claimed in claim 6, wherein the starch hydrolysate has a D.E. of 20 or less.

8. A method as claimed in claim 7, wherein the starch hydrolysate is a maltodextrin.

9. A method as claimed in claim 6, 7 or 8, wherein the starch hydrolysate comprises at least 8 percent by weight of the total weight of the second dough.

10. A method as claimed in claim 9, wherein the starch hydrolysate comprises 14 to 20 percent by weight of the total weight of the second dough and has a D.E. of 10 to 20.

11. A method as claimed in any claims 6 to 10, wherein sucrose is absent from the second dough.

12. A method as claimed in any of claims 6 to 11, wherein the second dough includes sucrose or a reducing sugar in addition to any sugar which may be present in the starch hydrolysate.

13. A method as claimed in any of claims 6 to 12, wherein the first dough includes a reducing sugar in an amount effective to produce the soft, chewy shelf-stable texture upon baking.

14. A method as claimed in any of claims 6 to 13, having the step of baking the laminated first and second doughs, to a water activity in the range 0.25 to 0.8.

**Patentansprüche**
**Patentansprüche für folgende Vertragsstaaten : BE, CH, DE, FR, GB, IT, LI, LU, NL, SE**

1. Gebackenes Nahrungsmittelerzeugnis, das Teigbestandteile und ein Stärkehydrolysat mit einem D.E. von 42 oder weniger enthält, **dadurch gekennzeichnet**, daß es bis zu einer Wasseraktivität im Bereich von 0,25 bis 0,8 gebacken ist und daß die Menge an Stärkehydrolysat, die dieses enthält, im Bereich von 2 bis 30 Gew.-% des ungebackenen Teigs liegt und wirksam ist, um dem gebackenen Erzeugnis eine knusprige, lagerbeständige Textur zu verleihen, die wesentlich härter als die eines äquivalenten Erzeugnisses ist, das kein Stärkehydrolysat enthält.

2. Gebackenes Nahrungsmittelerzeugnis nach Anspruch 1, in dem das Stärkehydrolysat mindestens 8 Gew.-% des Gesamtgewichts der Teigbestandteile vor dem Backen umfaßt.

3. Gebackenes Nahrungsmittelerzeugnis nach Anspruch 2, in dem das Stärkehydrolysat zu 14 bis 20 Gew.-% des Gesamtgewichts Teigbestandteile vor dem Backen umfaßt und ein D.E. von 10 bis 20 hat.

4. Gebackenes Nahrungsmittelerzeugnis nach einem der vorstehenden Ansprüche, das keine Saccharose enthält.

5. Gebackenes Nahrungsmittelerzeugnis nach einem der Ansprüche 1 bis 3, in dem die Teigbestandteile auch Saccharose oder einen reduzierenden Zucker zusätzlich zu Zuckern, die in dem Stärkehydrolysat vorhanden sein können, beinhaltet.

6. Gebackenes Nahrungsmittelerzeugnis, das Teigbestandteile und ein Stärkehydrolysat mit einem D.E. von 42 oder weniger enthält, **dadurch gekennzeichnet,** daß es bis zu einer Wasseraktivität im Bereich von 0,25 bis 0,8 gebacken ist und daß es mindestens zwei krümelige durchgängige Bereiche umfaßt, die sich voneinander in ihrer Textur unterscheiden, wobei der eine Bereich einen gebackenen Teig mit einer weichen und kaufreundlichen Textur und der andere Bereich einen gebackenen Teig umfaßt, der das Stärkehydrolysat in einer Menge im Bereich von 2 bis 30 Gew.-% des ungebackenen Teigs beinhaltet, was bewirkt, daß diesem anderen Bereich eine knusprige, wesentlich härtere Textur verliehen wird als die weiche und kaufreundliche Textur des ersten Bereiches, wobei die weiche und kaufreundliche und die härtere Texturen lagerstabil formstabil sind.

7. Gebackenes Nahrungsmittelerzeugnis nach Anspruch 6, in dem das Stärkehydrolysat mindestens 8 Gew.-% des Teigs in dem anderen Bereich vor dem Backen umfaßt.

8. Gebackenes Nahrungsmittelerzeugnis nach Anspruch 7, in dem das Stärkehydrolysat 14 bis 20 Gew.-% des Gesamtgewichts des Teiges in dem anderen Bereich vor dem Backen umfaßt und ein D.E. von 10 bis 20 hat.

9. Gebackenes Nahrungsmittelerzeugnis nach einem der Ansprüche 6, 7 oder 8, in dem keine Saccharose in dem anderen Bereich vorhanden ist.

10. Gebackenes Nahrungsmittelerzeugnis nach einem der Ansprüche 6, 7 oder 8, in dem der Teig in dem anderen Bereich Saccharose oder einen reduzierenden Zucker zusätzlich zu Zucker, der in dem Stärkehydrolysat vorhanden sein kann, beinhaltet.

11. Gebackenes Nahrungsmittelerzeugnis nach einem der Ansprüche 6 bis 10, in dem der gebackene Teig in dem einen Bereich einen reduzierenden Zucker in einer solchen Menge beinhaltet, daß der eine Bereich eine lagerstabile Textur hat, die weich und kaufreundlich verglichen mit dem anderen Bereich ist.

12. Gebackenes Nahrungsmittelerzeugnis nach einem der vorstehenden Ansprüche, in dem das Stärkehydrolysat ein D.E. von 20 oder weniger hat.

13. Gebackenes Nahrungsmittelerzeugnis nach Anspruch 12, in dem das Stärkehydrolysat ein Maltodextrin ist.

14. Teigvorform, umfassend Teigbestandteile und ein Stärkehydrolysat mit einem D.E. von 42 oder weniger, **dadurch gekennzeichnet**, daß sie geschichtet ist und umfaßt: erste und zweite nicht gebackene vorgemischte Teigschichten, die Inhaltsstoffe enthalten, die, wenn sie gebacken sind, eine Schichtstruktur bewirken, die durchgängig über ihre Querschnittsfläche im wesentlichen krümelig ist, wobei die erste Schicht, wenn sie gebacken ist, eine lagerstabile erste Textur aufweist und die zweite Schicht ein Stärkehydrolysat in einer Menge im Bereich von 2 bis 30 Gew.-% des Teigs enthält, das die Wirkung hat, dieser zweiten Schicht nach dem Backen eine knusperige, wesentlich härtere lagerstabile Textur als die erste Textur zu verleihen.

15. Vorform nach Anspruch 14, in der das Stärkehydrolysat mindestens 8 Gew.-% des Gesamtgewichts des vorgemischten Teiges in der zweiten Schicht umfaßt.

**16.** Vorform nach Anspruch 15, in der das Stärkehydrolysat 14 bis 20 Gew.-% des Gesamtgewichts des vorgemischten Teiges in der zweiten Schicht umfaßt und ein D.E. von 10 bis 20 aufweist.

**17.** Vorform nach Anspruch 14, 15, oder 16, in der die zweite Schicht keine Saccharose enthält.

**18.** Vorform nach Anspruch 14, 15 oder 16, in der der vorgemischte Teig in der zweiten Schicht Saccharose oder einen reduzierenden Zucker zusätzlich zu Zuckern, die im Stärkehydrolysat vorhanden sein können, beinhaltet.

**19.** Vorform nach einem der Ansprüche 14 bis 17, in der die erste vorgemischte Teigschicht einen reduzierenden Zucker in einer solchen Menge beinhaltet, daß nach dem Backen die erste Schicht eine lagerstabile Textur hat, die weich und kaufreundlich im Vergleich zu der zweiten Schicht ist.

**20.** Vorform nach einem der Ansprüche 14 bis 19, in der das Stärkehydrolysat ein D.E. von 20 oder weniger hat.

**21.** Vorform nach Anspruch 20, in der das Stärkehydrolysat ein Maltodextrin ist.

**22.** Verfahren zur Herstellung einer gebackenen Teigwaren-Vorform, umfassend Teigbestandteile und ein Stärkehydrolysat mit einem D.E. von 42 oder weniger, **dadurch gekennzeichnet,** daß man einen ersten Teig vormischt, der, wenn er gebacken ist, eine weiche, kaufreundliche, lagerstabile Textur hat; einen zweiten Teig vormischt, der ein Stärkehydrolysat in einer Menge von 2 bis 30 Gew.-% des Teigs beinhaltet, das in der Lage ist, dem zweiten Teig nach dem Backen eine knusperige, wesentlich härtere lagerstabile Textur zu verleihen, als die weiche kaufreundliche Textur des ersten Teiges und den ersten und den zweiten Teig zusammenschichtet.

**23.** Verfahren nach Anspruch 22, in dem das Stärkehydrolysat ein D.E. von 20 oder weniger hat.

**24.** Verfahren nach Anspruch 23, in dem das Stärkehydrolysat ein Maltodextrin ist.

**25.** Verfahren nach Anspruch 22, 23 oder 24, in dem das Stärkehydrolysat mindestens 8 Gew.-% des Gesamtgewichts des zweiten Teiges umfaßt.

**26.** Verfahren nach Anspruch 25, in dem das Stärkehydrolysat 14 bis 20 Gew.-% des Gesamtgewichts des zweiten Teiges umfaßt und ein D.E. von 10 bis 20 hat.

**27.** Verfahren nach einem der Ansprüche 22 bis 26, in dem der zweite Teig keine Saccharose enthält.

**28.** Verfahren nach einem der Ansprüche 22 bis 27, in dem der zweite Teig Saccharose oder einen reduzierenden Zucker zusätzlich zu Zuckern, die in dem Stärkehydrolysat vorhanden sein können, beinhaltet.

**29.** Verfahren nach einem der Ansprüche 22 bis 28, in dem der erste Teig einen reduzierenden Zucker in einer Menge beinhaltet, die eine weiche kaufreundliche lagerstabile Textur beim Backen bewirkt.

**30.** Verfahren nach einem der Ansprüche 22 bis 29, wobei der Schritt des Backens der geschichteten ersten und zweiten Teige bis zu einer Wasseraktivität im Bereich von 0,25 bis 0,8 erfolgt.

**Patentansprüche für folgenden Vertragsstaat : AT**

**1.** Verfahren zur Herstellung eines gebackenen Nahrungsmittelerzeugnisses, das Teigbestandteile und ein Stärkehydrolysat mit einem D.E. von 42 oder weniger enthält, **dadurch gekennzeichnet,** daß es bis zu einer Wasseraktivität im Bereich von 0,25 bis 0,8 gebacken ist und daß die Menge an Stärkehydrolysat, die dieses enthält, im Bereich von 2 bis 30 Gew.-% des ungebackenen Teigs liegt und wirksam ist, um dem gebackenen Erzeugnis eine knusprige, lagerbeständige Textur zu verleihen, die wesentlich härter als die eines äquivalenten Erzeugnisses ist,das kein Stärkehydrolysat enthält.

**2.** Verfahren nach Anspruch 1, in dem das Stärkehydrolysat mindestens 8 Gew.-% des Gesamtgewichts der Teigbestandteile vor dem Backen umfaßt.

3. Verfahren nach Anspruch 2, in dem das Stärkehydrolysat zu 14 bis 20 Gew.-% des Gesamtgewichts Teigbestandteile vor dem Backen umfaßt und ein D.E. von 10 bis 20 hat.

4. Verfahren nach einem der vorstehenden Ansprüche, das keine Saccharose enthält.

5. Verfahren nach einem der Ansprüche 1 bis 3, in dem die Teigbestandteile auch Saccharose oder einen reduzierenden Zucker zusätzlich zu Zuckern, die in dem Stärkehydrolysat vorhanden sein können, beinhaltet.

6. Verfahren zur Herstellung einer gebackenen Teigwaren-Vorform, umfassend Teigbestandteile und ein Stärkehydrolysat mit einem D.E. von 42 oder weniger, **dadurch gekennzeichnet,** daß man
einen ersten Teig vormischt, der, wenn er gebacken ist, eine weiche, kaufreundliche, lagerstabile Textur hat; einen zweiten Teig vormischt, der ein Stärkehydrolysat in einer Menge von 2 bis 30 Gew.-% des Teigs beinhaltet, das in der Lage ist, dem zweiten Teig nach dem Backen eine knusperige, wesentlich härtere lagerstabile Textur zu verleihen, als die weiche kaufreundliche Textur des ersten Teiges und den ersten und den zweiten Teig zusammenschichtet.

7. Verfahren nach Anspruch 6, in dem das Stärkehydrolysat ein D.E. von 20 oder weniger hat.

8. Verfahren nach Anspruch 7, in dem das Stärkehydrolysat ein Maltodextrin ist.

9. Verfahren nach Anspruch 6, 7 oder 8, in dem das Stärkehydrolysat mindestens 8 Gew.-% des Gesamtgewichts des zweiten Teiges umfaßt.

10. Verfahren nach Anspruch 9, in dem das Stärkehydrolysat 14 bis 20 Gew.-% des Gesamtgewichts des zweiten Teiges umfaßt und ein D.E. von 10 bis 20 hat.

11. Verfahren nach einem der Ansprüche 6 bis 10, in dem der zweite Teig keine Saccharose enthält.

12. Verfahren nach einem der Ansprüche 6 bis 11, in dem der zweite Teig Saccharose oder einen reduzierenden Zucker zusätzlich zu Zuckern, die in dem Stärkehydrolysat vorhanden sein können, beinhaltet.

13. Verfahren nach einem der Ansprüche 6 bis 12, in dem der erste Teig einen reduzierenden Zucker in einer Menge beinhaltet, die eine weiche kaufreundliche lagerstabile Textur beim Backen bewirkt.

14. Verfahren nach einem der Ansprüche 6 bis 13, wobei der Schritt des Backens der geschichteten ersten und zweiten Teige bis zu einer Wasseraktivität im Bereich von 0,25 bis 0,8 erfolgt.

**Revendications**
**Revendications pour les Etats contractants suivants : BE, CH, DE, FR, GB, IT, LI, LU, NL, SE**

1. Produit de boulangerie contenant des ingredients de pâte et un hydrolysat d'amidon possédant un équivalent en dextrose D.E. égal à 42 ou moins, caractérisé en ce qu'il est cuit avec un niveau d'activité d'eau dans la gamme de 0,25 à 0,8 et que la quantité d'hydrolysat d'amidon qu'il contient se situe dans la gamme allant de 2 % à 30 % en poids de la pâte non cuite et est efficace pour conférer au produit de boulangerie une texture croustillante, stable à la conservation et qui est nettement plus dure que celle d'un produit équivalent ne contenant aucun hydrolysat d'amidon.

2. Produit de boulangerie selon la revendication 1, dans lequel l'hydrolysat d'amidon intervient pour au moins 8 pour cent en poids rapportés au poids total des ingrédients de la pâte avant cuisson.

3. Produit de boulangerie selon la revendication 2, dans lequel l'hydrolysat d'amidon intervient pour 14 à 20 pour cent en poids rapportés au poids total des ingrédients de la pâte avant cuisson et possède un équivalent en dextrose D.E. compris entre 10 et 20.

4. Produit de boulangerie selon l'une quelconque des revendications précédentes, qui ne contient pas de saccharose.

5. Produit de boulangerie selon l'une quelconque des revendications 1 à 3, dans lequel les ingrédients de la pâte incluent également du saccharose ou un sucre réducteur en plus de sucres pouvant être présents dans l'hydrolysat d'amidon.

6. Produit de boulangerie contenant des ingrédients de pâte et un hydrolysat d'amidon possédant un équivalent en dextrose D.E. égal à 42 ou moins, caractérisé en ce qu'il est cuit avec une activité d'eau dans la gamme de 0,25 à 0,8 et comprend au moins deux parties friables continues, dont les textures diffèrent, l'une des parties comprenant une pâte cuite possédant une texture tendre et facile à mâcher, tandis que l'autre partie comprend une pâte cuite qui contient l'hydrolysat d'amidon en une quantité qui se situe dans la gamme de 2 % à 30 % en poids de la pâte non cuite et est efficace pour conférer à l'autre partie une texture croustillante nettement plus dure que la texture tendre et facile à mâcher de la première partie, la structure tendre et facile à mâcher et la structure plus dure étant stables à la conservation.

7. Produit de boulangerie selon la revendication 6, dans lequel l'hydrolysat d'amidon intervient pour au moins 8 pour cent en poids de la pâte dans l'autre partie, avant cuisson.

8. Produit de boulangerie selon la revendication 7, dans lequel l'hydrolysat d'amidon intervient pour 14 à 20 % en poids rapportés au poids total de la pâte dans l'autre partie avant la cuisson, et possède un équivalent en dextrose D.E. compris entre 10 et 20.

9. Produit de boulangerie selon la revendication 6, 7 ou 8, dans lequel aucun saccharose n'est présent dans l'autre partie.

10. Produit de boulangerie selon la revendication 6, 7 ou 8, dans lequel la pâte dans l'autre partie contient du saccharose ou un sucre réducteur en plus d'un sucre susceptible d'être présent dans l'hydrolysat d'amidon.

11. Produit de boulangerie selon l'une quelconque des revendications 6 à 10, dans lequel la pâte cuite dans la première partie comprend un sucre réducteur en une quantité telle que la première partie possède une texture stable à la conservation, qui est tendre et facile à mâcher comparativement à ladite autre partie.

12. Produit de boulangerie selon l'une quelconque des revendications précédentes, dans lequel l'hydrolysat d'amidon possède un équivalent en dextrose D.E. égal à 20 ou moins.

13. Produit de boulangerie selon la revendication 12, dans lequel l'hydrolysat d'amidon est une maltodextrine.

14. Préforme de pâte comprenant des ingrédients de pâte et un hydrolysat d'amidon possédant un équivalent en dextrose D.E. égal à 42 ou moins, caractérisé en ce qu'il est stratifié et comprend :
    des première et seconde couches de pâtes prémélangées non cuites contenant des ingrédients, qui, une fois cuits, forment un produit stratifié sensiblement continûment friable sur toute sa section transversale, la première couche possédant, lorsqu'elle est cuite, une première texture stable à la conservation; et la seconde couche contenant l'hydrolysat d'amidon en une quantité qui est comprise dans la gamme allant de 2 % à 30 % en poids de la pâte et est efficace pour conférer à la seconde couche, lorsqu'elle est cuite, une texture croustillante, stable à la conservation et nettement plus dure que la première texture.

15. Préforme selon la revendication 14, dans laquelle l'hydrolysat d'amidon intervient pour au moins 8 % en poids rapportés au poids total de la pâte prémélangée dans la seconde couche.

16. Préforme selon la revendication 15, dans laquelle l'hydrolysat d'amidon intervient pour 14 à 20 % en poids rapportés au poids total de la pâte prémélangée dans la seconde couche et possède un équivalent en dextrose D.E. compris entre 10 et 20.

**17.** Préforme selon la revendication 14, 15 ou 16, dans laquelle aucun saccharose n'est présent dans la seconde couche.

**18.** Préforme selon la revendication 14, 15 ou 16, dans laquelle la pâte prémélangée dans la seconde couche comprend du saccharose ou un sucre réducteur en plus de sucres pouvant être présents dans l'hydrolysat d'amidon.

**19.** Préforme selon l'une quelconque des revendications 14 à 17, dans laquelle la première couche de pâte prémélangée comprend un sucre réducteur en une quantité telle que, lorsqu'elle est cuite, la première couche possède une texture stable à la conservation, qui est tendre et facile à mâcher comparativement à la seconde couche.

**20.** Préforme selon l'une quelconque des revendications 14 à 19, dans laquelle l'hydrolysat d'amidon possède un équivalent en dextrose D.E. égal à 20 ou moins.

**21.** Préforme selon la revendication 20, dans laquelle l'hydrolysat d'amidon est une maltodextrine.

**22.** Procédé pour préparer une préforme de produit de boulangerie comprenant des ingrédients de pâte et un hydrolysat d'amidon possédant un équivalent en dextrose D.E. égal à 42 ou moins, caractérisé par les opérations suivantes :
le mélange préalable d'une première pâte qui, lorsqu'elle est cuite, possède une texture tendre, facile à mâcher et stable à la conservation;
le mélange préalable d'une seconde pâte contenant l'hydrolysat d'amidon présent en une quantité qui se situe dans la gamme de 2 % à 30 % en poids de la pâte et efficace pour conférer à la seconde pâte, lorsqu'elle est cuite, une texture croustillante, stable à la conservation et nettement plus dure que la texture tendre et facile à mâcher de la première pâte; et
la superposition des première et seconde pâtes.

**23.** Procédé selon la revendication 22, dans lequel l'hydrolysat d'amidon possède un équivalent en dextrose D.E. égal à 20 ou moins.

**24.** Procédé selon la revendication 23, selon lequel l'hydrolysat d'amidon est une maltodextrine.

**25.** Procédé selon la revendication 22, 23 ou 24, selon lequel l'hydrolysat d'amidon intervient pour au moins 8 % en poids rapportés au poids total de la seconde pâte.

**26.** Procédé selon la revendication 25, selon lequel l'hydrolysat d'amidon intervient pour 14 à 20 % en poids rapportés au poids total de la seconde pâte et possède un équivalent en dextrose D.E. compris entre 10 et 20.

**27.** Procédé selon l'une quelconque des revendications 22 à 26, selon lequel la seconde pâte ne contient pas de saccharose.

**28.** Procédé selon l'une quelconque des revendications 22 à 27, selon lequel la seconde pâte contient du saccharose ou un sucre réducteur en plus d'un sucre pouvant être présent dans l'hydrolysat d'amidon.

**29.** Procédé selon l'une quelconque des revendications 22 à 28, selon lequel la première pâte comprend un sucre réducteur en une quantité efficace pour produire la texture tendre, facile à mâcher et stable à la conservation, lors de la cuisson.

**30.** Procédé selon l'une quelconque des revendications 22 à 29, incluant l'étape de cuisson des première et seconde pâtes supérieures superposées, avec une activité d'eau dans la gamme de 0,25 à 0,8.

**Revendications pour l'Etat contractant suivant : AT**

**1.** Procédé de préparation d'un produit de boulangerie contenant des ingrédients de pâte et un hydrolysat d'amidon possédant un équivalent en dextrose D.E. égal à 42 ou moins, caractérisé en ce qu'on fait cuire une pâte non cuite contenant de 2 à 30% en poids d'hydrolysat d'amidon jusqu'à un niveau d'activité d'eau dans la gamme de 0,25 à 0,8, cette quantité d'hydrolysat étant efficace pour conférer au produit de boulangerie une texture croustillante, stable à la conservation et qui est nettement plus dure que celle d'un produit équivalent ne contenant aucun hydrolysat d'amidon.

2. Procédé de préparation suivant la revendication 1, selon lequel l'hydrolysat d'amidon intervient pour au moins 8% en poids rapportés au poids total de la pâte non cuite.

3. Procédé de préparation suivant la revendication 2, selon lequel l'hydrolysat d'amidon intervient pour 14 à 20% en poids rapportés au poids total de la pâte non cuite et possède un équivalent en dextrose D.E. compris entre 10 et 20.

4. Procédé de préparation selon l'une quelconque des revendications précédentes, selon lequel la pâte non cuite ne contient pas de saccharose.

5. Procédé de préparation suivant l'une quelconque des revendications 1 à 3, selon lequel les ingrédients de la pâte comprennent également du saccharose ou un sucre réducteur en plus d'un sucre pouvant être présent dans l'hydrolysat d'amidon.

6. Procédé pour préparer une préforme de produit de boulangerie comprenant des ingrédients de pâte et un hydrolysat d'amidon possédant un équivalent en dextrose D.E. égal à 42 ou moins, caractérisé par les opérations suivantes :
le mélange préalable d'une première pâte qui, lorsqu'elle est cuite, possède une texture tendre, facile à mâcher et stable à la conservation;
le mélange préalable d'une seconde pâte contenant l'hydrolysat d'amidon présent en une quantité qui se situe dans la gamme de 2 à 30% en poids de la pâte et efficace pour conférer à la seconde pâte, lorsqu'elle est cuite, une texture croustillante, stable à la conservation et nettement plus dure que la texture tendre et facile à mâcher de la première pâte; et
la superposition des première et seconde pâtes.

7. Procédé selon la revendication 6, dans lequel l'hydrolysat d'amidon possède un équivalent en dextrose D.E. égal à 20 ou moins.

8. Procédé selon la revendication 7, selon lequel l'hydrolysat d'amidon est une maltodextrine.

9. Procédé selon la revendication 6, 7 ou 8, selon lequel l'hydrolysat d'amidon intervient pour au moins 8% en poids rapportés au poids total de la seconde pâte.

10. Procédé selon la revendication 9, selon lequel l'hydrolysat d'amidon intervient pour 14 à 20% en poids rapportés au poids total de la seconde pâte non cuite et possède un équivalent en dextrose D.E. compris entre 10 et 20.

11. Procédé selon l'une quelconque des revendications 6 à 10, selon lequel la seconde pâte non cuite ne contient pas de saccharose.

12. Procédé selon l'une quelconque des revendications 6 à 11, selon lequel la seconde pâte contient du saccharose ou un sucre réducteur en plus d'un sucre pouvant être présent dans l'hydrolysat d'amidon.

13. Procédé selon l'une quelconque des revendications 6 à 12, selon lequel la première pâte comprend un sucre réducteur en une quantité efficace pour produire la texture tendre, facile à mâcher et stable à la conservation, lors de la cuisson.

14. Procédé selon l'une quelconque des revendications 6 à 13, incluant l'étape de cuisson des première et seconde pâte supérieures superposées, avec une activité d'eau dans la gamme de 0,25 à 0,8.